# EUROPÄISCHE PATENTANMELDUNG

(11) **EP 3 629 453 A1**
(43) Veröffentlichungstag der Anmeldung: **01.04.2020**
(21) Anmeldenummer: 18197125.0
(22) Anmeldetag: 27.09.2018
(51) Int. Cl.: H02K 15/02, B22F 3/00, B22F 3/10, B22F 5/08, B22F 7/06, B33Y 80/00, B33Y 10/00, B33Y 40/00, B23K 20/02, B22F 5/00

(54) **VERFAHREN ZUM SINTERN EINES MEHRKOMPONENTIGEN SINTERZEUGS, ELEKTRISCHE MASCHINE UND ELEKTRISCHES FAHRZEUG**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Bei dem Verfahren zum Sintern eines mehrkomponentigen Sinterzeugs wird eine mit einem ersten Material gebildete erste Komponente mit Ausnehmungen für eine zweite Komponente gedruckt und es wird eine mit einem zweiten Material gebildete zweite Komponente in die Ausnehmungen der ersten Komponente eingelegt wird und es werden erste und zweite Komponente mittels Sinterns aneinander angeschrumpft.

Die Elektrische Maschine weist einen Rotor, gebildet aus mit einem Verfahren nach einem der vorhergehenden Ansprüche gefertigten Rotorblechen, auf.

Das elektrische Fahrzeug ist insbesondere ein hybridelektrisches Flugzeug und weist eine solche elektrischen Maschine auf.

## Beschreibung

Die Erfindung betrifft ein Verfahren zum Sintern eines mehrkomponentigen Sinterzeugs, eine elektrische Maschine und ein elektrisches Fahrzeug.

Ein neues Verfahren zur Herstellung von Magnetblechen für elektrische Maschinen nutzt den Schablonendruck. Bei diesem Verfahren wird ausgehend von Metallpulvern zunächst eine Druckpaste erzeugt, welche dann mittels einer Schablonendrucktechnik zu einem Grünkörper in Gestalt einer Dickschicht verarbeitet wird. Anschließend wird dieser Grünkörper durch thermische Behandlung, d.h. mittels Entbinderung und Sinterung, in ein metallisches, strukturiertes Blech in Gestalt eines Magnetblechs überführt.

Es ist bekannt, auch mehrkomponentige Magnetbleche auf solche Weise herzustellen. Dazu werden die verschiedenen Komponenten eines Magnetblechs sequentiell hintereinander auf eine Trägerplatte gedruckt und danach gemeinsam thermisch behandelt.

Jedoch können nicht sämtliche Werkstoffe auf diese Weise zur Sinterung herangezogen werden. Insbesondere das Sintern von verzugfreiem und dichtem Sinterzeug ist auf diese Weise bisweilen nur schwer zu realisieren.

Es ist daher Aufgabe der Erfindung, ein Verfahren zum Sintern eines mehrkomponentigen Sinterzeugs anzugeben, welches die eingangs erwähnten Nachteile überwindet. Ferner ist es Aufgabe der Erfindung, eine verbesserte elektrische Maschine und ein verbessertes elektrisches Fahrzeug anzugeben.

Diese Aufgabe der Erfindung wird mit einem Verfahren zum Sintern eines mehrkomponentigen Sinterzeugs mit den in Anspruch 1 angegebenen Merkmalen sowie mit einer elektrischen Maschine mit den in Anspruch 12 angegebenen Merkmalen sowie mit einem elektrischen Fahrzeug mit den in Anspruch 13 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zum Sintern eines mehrkomponentigen Sinterzeugs wird eine mit einem ersten Material gebildete erste Komponente mit mindestens einer Ausnehmung, d.h. mit einer oder mehreren Ausnehmungen, für eine zweite Komponente gedruckt und es wird eine mit einem zweiten Material gebildete zweite Komponente in die Ausnehmung oder Ausnehmungen der ersten Komponente eingelegt und es werden erste und zweite Komponente mittels Sinterns aneinander angeschrumpft. Anschrumpfen meint dabei, dass aufgrund unterschiedlichen Sinterschwunds bei entsprechender Geometrie von erster und zweiter Komponente eine feste Verbindung von erster und zweiter Komponente erreicht wird.

Erfindungsgemäß können Materialien mit deutlich verschiedenen Sinterschwindungen miteinander zu einem verzugsfreien und dichten Sinterzeug mit hoher mechanischer Festigkeit, insbesondere an Grenzen von erster Komponente und zweiter Komponente, gesintert werden.

Mittels des erfindungsgemäßen Verfahrens können vorteilhaft auch schwer sinterbare oder nur schwer in Pulverform erhältliche Materialien Komponenten in mehrkomponentigen Sinterzeugen bilden. Insbesondere schwer sinterbare magnetische Materialien können mittels des erfindungsgemäßen Verfahrens leicht zu einem mehrkomponentigen Sinterzeug gesintert werden.

Ferner können mittels der gemeinsamen Sinterung von erster und zweiter Komponente Prozessschritte bei der Fertigung separiert und parallelisiert werden, sodass der Auslastungsgrad der eingesetzten Maschinen deutlich erhöht ist.

Zweckmäßig bildet bei dem erfindungsgemäßen Verfahren das Sinterzeug eine Schicht, insbesondere ein Magnetblech, d.h. das erfindungsgemäße Verfahren ist ein Verfahren zum Sintern einer solchen Schicht. Vorzugsweise ist das Magnetblech ein Rotorblech oder ein Statorblech.

Mittels des erfindungsgemäßen Verfahrens lassen sich insbesondere Magnetbleche fertigen, welche ein Rotorblech und/oder ein Statorblech bilden und welche in einer radialen Richtung strukturiert sind und insbesondere in einer radialen Richtung eine Abfolge von erster und zweiter Komponente aufweisen. Zweckmäßig lassen sich Magnetbleche fertigen, welche vorgefertigte Laminate und/oder Faserverbundwerkstoffe umfassen.

Vorzugsweise ist die zweite Komponente eine gestanzte Komponente und/oder eine vorgesinterte Struktur. Zweckmäßig sind etwa flussführende Bereiche von Magnetblechen mittels der zweiten Komponente gebildet.

Bevorzugt wird bei dem erfindungsgemäßen Verfahren die erste Komponente mit mindestens einer solchen Ausnehmungen gedruckt, welche die zweite Komponente umgreift oder umrahmt.

Besonders bevorzugt wird bei dem erfindungsgemäßen Verfahren die erste Komponente mit mindestens einer gezahnten und/oder gestuften Ausnehmung gebildet. Auf diese Weise lässt sich die Verbindung der ersten Komponente und der zweiten Komponente durch Formschluss infolge der mindestens einen gezahnten und/oder gestuften Ausnehmung zusätzlich verbessern.

Vorteilhaft wird bei dem Verfahren gemäß der Erfindung eine erste Komponente mit einer im Vergleich zur zweiten Komponente ausgeprägteren Sinterschwindung herangezogen. Auf diese Weise umschrumpft die erste Komponente beim Sintern die zweite, in Ausnehmungen der ersten Komponenten eingelegte, Komponente.

Zweckmäßig wird bei dem erfindungsgemäßen Verfahren die zweite Komponente gedruckt, bevor erste und zweite Komponente gesintert werden. Auf diese Weise sind auch konventionell schwer realisierbare Geometrien von erster und zweiter Komponente fertigbar.

In einer vorteilhaften Weiterbildung des Verfahrens gemäß der Erfindung wird die zweite Komponente, insbesondere aus einem Blech und/oder mittels eines Lasers, gestanzt oder geschnitten, bevor erste und zweite Komponente gemeinsam gesintert werden. Auf diese Weise können einfach Stanzteile als zweite Komponenten gefertigt und zu einem mehrkomponentigen Sinterzeug verarbeitet werden.

Bei dem erfindungsgemäßen Verfahren ist die erste Komponente vorzugsweise amagnetisch.

Geeignet ist bei dem Verfahren gemäß der Erfindung die zweite Komponente weichmagnetisch und/oder elektrisch leitend und/oder permanentmagnetisch. Auf diese Weise können magnetisch flussführende oder felderzeugende Bestandteile eines Magnetblechs mittels des erfindungsgemäßen Verfahrens gefertigt werden.

Vorteilhaft werden bei dem erfindungsgemäßen Verfahren erste und zweite Komponente, vorzugsweise uniaxial oder isostatisch, aneinander gepresst und/oder laminiert. Auf diese Weise kann eine weiter verbesserte Verbindung von erster und zweiter Komponente erreicht werden und der Form- und/oder Kraftschluss von erster und zweiter Komponente erhöht werden.

Vorzugsweise ist bei dem erfindungsgemäßen Verfahren das Sinterzeug eine Schicht, idealerweise ein Magnetblech, etwa ein Rotor- und/oder Statorblech.

Besonders vorteilhaft wird bei dem erfindungsgemäßen Verfahren mittels eines Sinterwerkzeugs gesintert, das eine Sinterzeugfläche zur Anlage des Sinterzeugs aufweist, wobei bei dem Verfahren die Sinterzeugfläche beim Sintern, etwa mittels akustischer Oberflächenwellen, in Vibration versetzt wird. In dieser Weiterbildung der Erfindung lässt sich das kraft- und/oder formschlüssige Anhaften von Sinterzeug an der Sinterzeugfläche mittels der Vibration leicht vermeiden.

Die erfindungsgemäße elektrische Maschine weist einen Rotor, gebildet mit Rotorblechen und/oder einen Stator, gebildet mit Statorblechen auf, die mittels eines erfindungsgemäßen Verfahrens wie vorhergehend beschrieben gefertigt sind.

Das erfindungsgemäße elektrische Fahrzeug ist insbesondere ein hybridelektrisches Flugzeug und weist eine solche erfindungsgemäße elektrische Maschine auf.

Nachfolgend wird die Erfindung anhand eines in der Zeichnung dargestellten Ausführungsbeispiels näher erläutert.

Es zeigen:
- Fig. 1: ein erfindungsgemäß gefertigtes Magnetblech umfassend eine erste und eine zweite Komponente schematisch in einer Draufsicht,
- Fig. 2: eine Einzelheit des erfindungsgemäß gefertigten Magnetblechs gem. Fig. 1 schematisch in einer Draufsicht,
- Fig. 3: einen Längsschnitt der Einzelheit gem. Fig. 2 des Magnetblechs gem. Fig. 1 in einer schematischen Darstellung,
- Fig. 4: einen Rand einer Ausnehmung der ersten Komponente des Magnetblechs gem. Fig. 1 bis 3 schematisch in einer perspektivischen Darstellung,
- Fig. 5: ein weiteres Ausführungsbeispiel eines Rands einer Ausnehmung der ersten Komponente des Magnetblechs gem. Fig. 1 bis 3 schematisch in einer perspektivischen Darstellung,
- Fig. 6: ein weiteres Ausführungsbeispiel eines Rands einer Ausnehmung der ersten Komponente des Magnetblechs gem. Fig. 1 bis 3 schematisch in einer perspektivischen Darstellung, sowie
- Fig. 7: ein erfindungsgemäßes hybridelektrisches Flugzeug mit einem erfindungsgemäßen Elektromotor mit Magnetblechen gem. Fig. 1 bis 3 schematisch in einer Prinzipskizze.

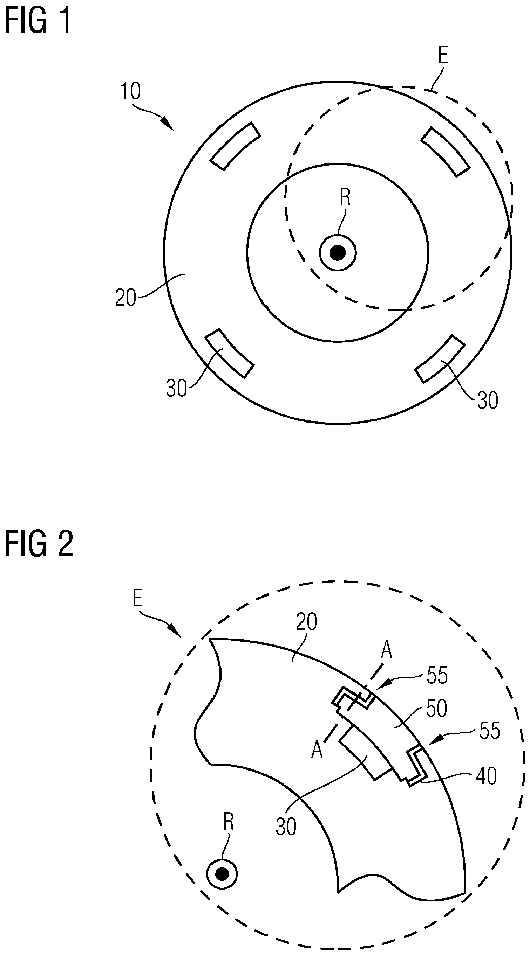

Das in Fig. 1 dargestellte erfindungsgemäß gefertigte Magnetblech 10 ist ein Magnetblech 10 zur Bildung eines Rotors einer elektrischen Maschine in Gestalt eines Elektromotors. Das Magnetblech 10 ist in an sich bekannter Weise im Wesentlichen, d.h. soweit nachfolgend nicht anders beschrieben, als kreiszylindrische Scheibe ausgebildet, die, zumindest soweit nachfolgend nicht anders beschrieben, mit einem magnetisch nicht-flussleitendem Material 20 gebildet ist. Das Magnetblech ist zur Drehung des Rotors um eine Rotationsachse R vorgesehen und ausgebildet, d.h. der Mittelpunkt der kreisförmigen Außenkontur des Magnetblechs 10 liegt auf der Rotationsachse R.

Das Magnetblech 40 weist umfänglich verteilt Durchführungen 30 auf, welche sich entlang eines Abschnitts in umfänglicher Richtung erstrecken, welcher länger ist als die Abmessung der Ausnehmung in radialer Richtung, im dargestellten Ausführungsbeispiel dreimal so lang. Die Durchführungen 30 des Magnetblechs 10 dienen zur Aufnahme von Permanentmagneten oder von Spulen zum Betrieb des Rotors des Elektromotors.

Das Magnetblech 10 weist wie in Einzelheit E in Fig. 2 dargestellt an den umfänglichen Orten der Durchführungen 30, jedoch radial außenliegend von diesen Durchführungen 30, jeweils einen Bereich 50 aus flussleitendem Metall auf, welcher sich von den Durchführungen 30 bis hin zum radialen Rand des Magnetblechs 10 erstreckt.

Der Bereich 50 ist von dem nicht-flussleitenden Material 20 derart eingerahmt, dass der Bereich 50 radial außenliegend von den Durchführungen 30 nicht etwa die Gestalt eines Kreissektors einnimmt, sondern stattdessen ragt am radialen äußeren Rand des Magnetblechs 10 jeweils das nicht-flussleitende Material 20 mit zwei in umfänglicher Richtung aufeinander zu weisenden Vorsprüngen 55 um den Bereich 50 herum aufeinander zu. Die Vorsprünge 55 treffen dabei umfänglich nicht zusammen, sondern lassen umfänglich einen Freiraum für den Bereich 50, sodass ein sich von den Durchführungen 30 bis zum radialen Rand des Magnetblechs 10 erstreckender Bereich 50 des Magnetblechs 10 von nicht-flussleitendem Material 20 frei bleibt. Auf diese Weise ist die Effizienz des so ausgebildeten Rotors nicht beeinträchtigt. Infolge der Vorsprünge 55 umklammert das nicht-flussleitende Material 20 den Bereich 50.

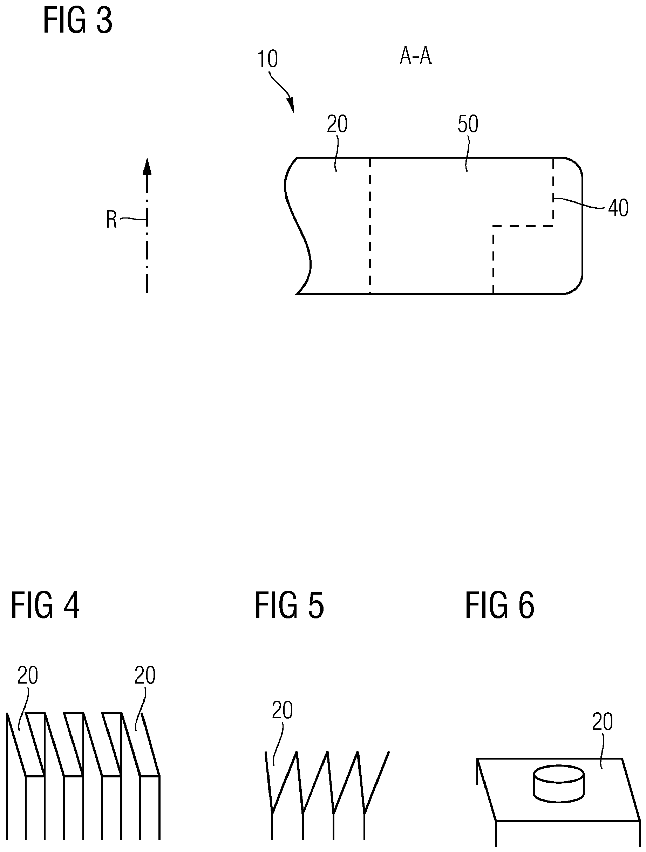

Ferner sind die Bereiche 50 an ihren Randbereichen, welche nicht an die Durchführungen 30 oder direkt an den radialen Rand des Magnetblechs 10 angrenzen, mit einem in axialer Richtung R gestuften Profil ausgebildet. Wie in Fig. 3 entlang eines Schnitts des Rotors gem. Fig. 2 dargestellt verläuft der Rand 40 der Bereiche 50 entlang eines ersten axialen Abschnitts des Magnetblechs 10 in axialer Richtung R und an einem sich an den ersten Abschnitt anschließenden zweiten axialen Abschnitt des Magnetblechs 10 ebenfalls in axialer Richtung R, allerdings ist der Rand 40 im zweiten axialen Abschnitt gegenüber dem Rand 40 im ersten axialen Abschnitt in einer Richtung senkrecht zu den Erstreckungsrichtungen des Randes 40 im ersten axialen Abschnitt versetzt. Aufgrund dieses gestuften Randes 40 zwischen nicht-flussleitendem Material 20 und Bereich 50 sind nicht-flussleitendes Material 20 und Bereich 50 neben der umfänglichen Verklammerung aufgrund der Vorsprünge 55 auch in axialer Richtung R miteinander verzahnt.

Zusätzlich kann der Rand 40 in weiteren Ausführungsbeispielen wie in den Fig. 4, 5 und 6 dargestellt in einer Ebene senkrecht zur axialen Richtung R gezahnt (Fig. 4) oder kammartig (Fig. 5) oder klemmbausteinartig (Fig. 6) verlaufen. Alternativ oder zusätzlich kann der Rand auch wellig ausgebildet sein. In diesen weiteren Ausführungsbeispielen gem. Fig. 4 bis 6 sind nicht-flussleitendes Material 20 sowie die Bereiche 50 miteinander verklammert oder verzahnt und somit formschlüssig miteinander verbunden.

In weiteren nicht dargestellten Ausführungsbeispielen kann der Rand 40 auch gebördelt oder mit einer Abflachung, etwa zur Aufnahme eines mit einer solchen Abflachung korrespondierenden Vorsprungs oder Kragens, versehen sein.

Erfindungsgemäß wird das Magnetblech gem. Fig. 1 wie folgt gefertigt:
Zunächst werden in einem ersten Verfahrensschritt zur Fertigung des Magnetblechs 10 die Bereiche aus dem nicht-flussleitenden Material 20 gedruckt, welche eine erste zusammenhängende Komponente aus dem nicht-flussleitenden Material 20 bilden. Anschließend wird die erste Komponente getrocknet. Dabei sind an der ersten Komponente Ausnehmungen vorgesehen, welche die Bereiche 50 mit dem flussleitenden Material bilden werden, nachdem die Bereiche 50 mit dem flussleitenden Material gefüllt sind.

In einem zweiten Verfahrensschritt des erfindungsgemäßen Verfahrens wird die erste Komponente in an sich bekannter Weise entbindert und vorgesintert. In weiteren, nicht eigens beschriebenen Ausführungsbeispielen des erfindungsgemäßen Verfahrens kann dieser zweite Schritt des Entbinderns und des Vorsinterns der ersten Komponente entfallen.

In einem dritten Verfahrensschritt werden als weitere Komponente weitere Bereiche 50 mit dem flussleitenden Material gedruckt. Der Druck der weiteren Bereiche 50 mit dem flussleitenden Material kann in einem weiteren, nicht gesondert dargestellten Ausführungsbeispiel, welches im Übrigen dem zuvor beschriebenen Ausführungsbeispiel entspricht, auch parallel zum Druck der ersten Komponente mit dem nicht-flussleitenden Material 20 erfolgen. Der dritte Verfahrensschritt muss also nicht zwingend zeitlich nach dem ersten Verfahrensschritt durchgeführt werden, sondern kann grundsätzlich auch zeitlich parallel zum ersten Verfahrensschritt erfolgen.

Der Druck der weiteren Komponenten mit den Bereichen 50 flussleitenden Materials erfolgt im hier beschriebenen Ausführungsbeispiel räumlich separat von der ersten Komponente mit dem nicht-flussleitenden Material 20. Grundsätzlich können alternativ auch die weiteren Bereiche 50 direkt in die Ausnehmungen der ersten Komponente hinein gedruckt werden.

In einem vierten Verfahrensschritt werden die weiteren Komponenten in an sich bekannter Weise entbindert und vorgesintert. In weiteren, nicht eigens beschriebenen Ausführungsbeispielen des erfindungsgemäßen Verfahrens kann dieser vierte Schritt des Entbinderns und des Vorsinterns der weiteren Komponenten entfallen.

In einem letzten Verfahrensschritt werden die erste Komponente aus dem nicht-flussleitenden Material 20 sowie die weiteren Bereiche 50 aus flussleitendem Material gemeinsam gesintert. Dabei ist die Sinterschwindung der ersten Komponente nicht-flussleitenden Materials 20 größer als die Sinterschwindung der weiteren Bereiche 50 flussleitenden Materials. Daher schrumpft die erste Komponte nicht-flussleitenden Materials 20 auf die weiteren Bereiche 50 flussleitenden Materials auf.

In den zuvor beschriebenen Ausführungsbeispielen müssen die weiteren Bereiche 50 flussleitenden Materials nicht zwingend als Sinterteile vorliegen. Alternativ oder zusätzlich können die weiteren Bereiche 50 flussleitenden Materials in weiteren, nicht eigens dargestellten Ausführungsbeispielen als Stanzteile vorliegen, welche in die Ausnehmungen der ersten Komponente eingelegt werden. Auch in diesen Ausführungsbeispielen kann die erste Komponente nicht-flussleitenden Materials 20 mittels Sinterns um die Stanzteile herum geschrumpft werden.

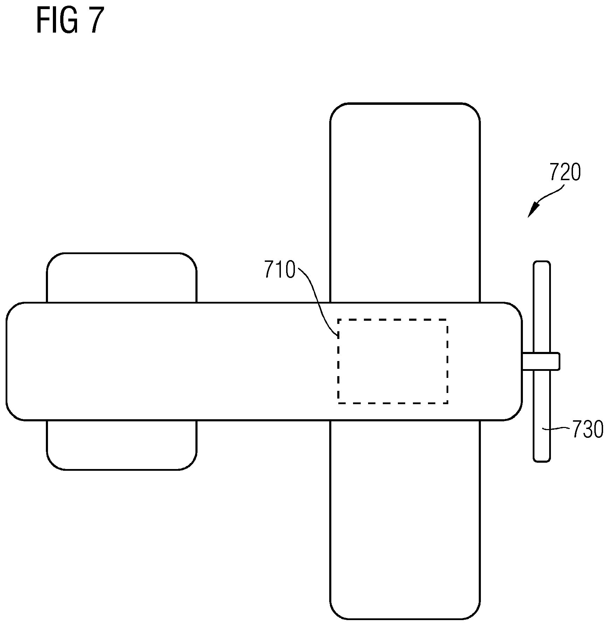

Die Magnetbleche 10 bilden wie in Fig. 7 dargestellt einen Rotor einer elektrischen Maschine 710 eines hybridelektrischen Flugzeugs 720. In weiteren, nicht eigens dargestellten Ausführungsbeispielen können die Magnetbleche 10 auch einen Stator der elektrischen Maschine 710 bilden. Die elektrische Maschine 710 bildet einen Elektromotor des hybridelektrischen Flugzeugs 720 und ist mit einem Propeller 730 des hybridelektrischen Flugzeugs 720 zu dessen Antrieb verbunden.

## Patentansprüche

1. Verfahren zum Sintern eines mehrkomponentigen Sinterzeugs (10), bei welchem eine mit einem ersten Material (20) gebildete erste Komponente mit einer oder mehreren Ausnehmungen für eine zweite Komponente (50) gedruckt wird, eine mit einem zweiten Material gebildete zweite Komponente (50) in die Ausnehmung oder Ausnehmungen der ersten Komponente eingelegt wird und erste und zweite Komponente (50) mittels Sinterns aneinander angeschrumpft werden.

2. Verfahren nach dem vorhergehenden Anspruch, bei welchem das Sinterzeug (10) eine Schicht, insbesondere ein Blech und/oder ein Magnetblech, idealerweise ein Rotorblech oder ein Statorblech, bildet.

3. Verfahren nach dem vorhergehenden Anspruch, bei welchem die erste Komponente mit mindestens einer solchen Ausnehmung gedruckt wird, welche die zweite Komponente (50) umgreift oder umrahmt.

4. Verfahren nach dem vorhergehenden Anspruch, bei welchem die erste Komponente mit mindestens einer gezahnten und/oder gestuften Ausnehmung gebildet wird.

5. Verfahren nach einem der vorhergehenden Ansprüche, bei welchem eine erste Komponente mit einer im Vergleich zur zweiten Komponente (50) ausgeprägteren Sinterschwindung herangezogen wird.

6. Verfahren nach einem der vorhergehenden Ansprüche, bei welchem die zweite Komponente (50) gedruckt wird, bevor erste und zweite Komponente gesintert werden.

7. Verfahren nach einem der vorhergehenden Ansprüche, bei welchem die zweite Komponente, insbesondere aus einem Blech und/oder mittels eines Lasers, gestanzt oder geschnitten wird, bevor erste und zweite Komponente (50) gemeinsam gesintert werden.

8. Verfahren nach einem der vorhergehenden Ansprüche, bei welchem die erste Komponente amagnetisch ist.

9. Verfahren nach einem der vorhergehenden Ansprüche, bei welchem die zweite Komponente (50) weichmagnetisch und/oder elektrisch leitend und/oder permanentmagnetisch ist.

10. Verfahren nach einem der vorhergehenden Ansprüche, bei welchem das Sinterzeug eine Schicht, vorzugsweise ein Magnetblech, ist.

11. Verfahren nach einem der vorhergehenden Ansprüche, bei welchem mittels eines Sinterwerkzeugs gesintert wird, welches eine Sinterzeugfläche zur Anlage des Sinterzeugs (10) aufweist und bei welchem die Sinterzeugfläche beim Sintern, etwa mittels akustischer Oberflächenwellen, in Vibration versetzt wird.

12. Elektrische Maschine, aufweisend einen Rotor, gebildet aus nach einem Verfahren nach einem der vorhergehenden Ansprüche gefertigten Rotorblechen (10).

13. Elektrisches Fahrzeug, insbesondere hybridelektrisches Flugzeug, mit einer elektrischen Maschine (710) nach einem der vorhergehenden Ansprüche.
